# FASCICULE DE BREVET EUROPEEN

(11) **EP 3 844 066 B1**
(45) Date de publication et mention de la délivrance du brevet: **30.07.2025**
(21) Numéro de dépôt: 19774142.4
(22) Date de dépôt: 27.08.2019
(51) Int. Cl.: B64D 17/38, B64D 17/30

(54) **DISPOSITIF DE DÉCONNEXION D'UN SYSTÈME D'EMPORT DE CHARGE PAR UNE ACTION MÉCANIQUE ET SYSTÈME D'EMPORT DE CHARGE ÉQUIPÉ D'UN TEL DISPOSITIF DE DÉCONNEXION**
VORRICHTUNG ZUM TRENNEN EINES LASTTRAGSYSTEMS DURCH MECHANISCHE BETÄTIGUNG UND LASTTRAGSYSTEM MIT SOLCH EINER TRENNVORRICHTUNG
DEVICE FOR DISCONNECTING A LOAD-CARRYING SYSTEM BY A MECHANICAL ACTION, AND LOAD-CARRYING SYSTEM EQUIPPED WITH SUCH A DISCONNECT DEVICE

(30) Priorité: 27.08.2018 FR 1857686; 28.09.2018 FR 1858981
(43) Date de publication de la demande: 07.07.2021
(73) Titulaire: Safran Aerosystems, 78370 Plaisir (FR)
(72) Inventeur: GOMIS, Christian, 78370 PLAISIR (FR); THARREAU, Alexandre, 78370 PLAISIR (FR)
(74) Mandataire: Casalonga
(86) Numéro de dépôt international: PCT/FR2019/051973
(87) Numéro de publication internationale: WO 2020/043987

(56) Documents cités:
- JP-A- 2002 166 894
- US-A- 2 405 333
- US-A1- 2010 001 140
- US-A1- 2012 291 234

## Description

L'invention a pour domaine technique les dispositifs de déconnexion ou de largage d'un système d'emport de charge et un tel système d'emport de charge, telle qu'une gaine d'emport de charge, connecté à un système parachute.

Un système d'emport de charge est connecté à un système parachute permettant ainsi à un utilisateur d'emporter une charge utile lors des différentes phases d'une mission, notamment lors d'un déplacement au sol et dans une soute d'un aéronef, en chute libre ou lors d'une navigation sous voile. La connexion du système d'emport de charge au système parachute est assurée par une liaison entre des pièces mécaniques, telles que des mousquetons, montées sur le système d'emport de charge et des anneaux associés présents sur le système parachute.

Les systèmes actuels de connexion de systèmes d'emport de charge peuvent induire des déconnexions intempestives et/ou des blocages. De plus, une action réalisée en vue d'assurer une déconnexion est souvent orientée vers une seule et unique direction pour assurer sa fonction.

De plus, suivant la masse du système d'emport de charge et les systèmes mécaniques de connexion utilisés, la force nécessaire à la déconnexion peut être importante du fait d'un renvoi d'efforts dû à la masse de la charge utile maintenue par le système d'emport de charge sur les systèmes mécaniques de connexion.

Un exemple de l'art antérieur est fourni par le document US2012291234A1, qui divulgue, selon son abrégé, un mécanisme de séparation pour libérer un sac d'équipement. Ledit mécanisme comprend un ensemble de base, un ensemble amovible à boucle souple, une bague de fixation et un élément de retenue. Ledit ensemble de base comprend un élément de base, une ouverture et un ou plusieurs anneaux d'ensemble de base. Ledit ensemble à boucle souple comprend une base de boucle souple et une boucle souple. Ladite boucle souple est insérée à travers l'ouverture et un premier anneau d'ensemble de base. La base de boucle souple est conçue de façon à ne pas être tirée à travers l'ouverture. Un dernier anneau d'ensemble de base est introduit à travers la bague de fixation. Ledit élément de retenue est introduit à travers la boucle souple pour retenir le premier anneau d'ensemble de base. Lesdits anneaux d'ensemble de base sont mis en contact de manière séquentielle pour accoupler la bague de fixation à l'élément de base. L'élément de retenue est tiré hors de la boucle souple pour libérer les anneaux d'ensemble de base et libérer ainsi la bague de fixation. Le document US2010001140A1 donne un autre exemple de l'art antérieur.

Il existe un besoin pour un dispositif de déconnexion par action mécanique résolvant les problèmes de l'art antérieur.

L'invention a pour objet, selon la revendication 1, un système d'emport de charge configuré pour maintenir en place une charge par rapport à un harnais, comprenant un dispositif de déconnexion par une action mécanique permettant de solidariser de façon réversible le système d'emport de charge et le harnais.

Le guide peut être disposé à proximité de la pièce mécanique de connexion, de sorte que l'organe de liaison passant à travers le guide soit colinéaire à la direction prédéfinie d'ouverture dans une partie comprise entre le guide et la pièce mécanique de connexion.

La pièce mécanique de connexion peut être un mousqueton à mâchoires à ouverture par ressort.

Le moyen de déclenchement peut être une poignée ou une anse.

Le guide peut être disposé dans un plan équidistant des pièces mécaniques de connexion.

L'invention a également pour objet un système d'emport de charge et un harnais associé, dans lequel le harnais est un harnais d'un système parachute.

Le dispositif de déconnexion par action mécanique présente l'avantage d'un effort d'ouverture constant et ne dépendant pas de la masse du système d'emport de charge, mais uniquement des caractéristiques de la pièce mécanique de connexion. De plus, l'action mécanique peut être exercée dans diverses directions grâce au renvoi de l'effort d'ouverture de la pièce mécanique de connexion par les guides qui assurent à l'utilisateur la possibilité d'exercer une action mécanique dans toutes les directions de l'espace.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentées à titre d'exemples non limitatifs, qui pourront servir à compléter la compréhension de la présente invention et l'exposé de sa réalisation et, le cas échéant, contribuer à sa définition, sur lesquelles :
- la figure 1 illustre une vue de face en perspective d'un système d'emport de charge, tel qu'une gaine d'emport de charge, selon la présente invention, apte à être connecté à un système parachute par l'intermédiaire d'un harnais,
- les figures 2 à 3 illustrent le système d'emport de charge relié à une partie du harnais du système parachute selon la présente invention avec des boucleries spécifiques respectivement en position fermée et en position ouverte de sorte à permettre que le système d'emport de charge soit déconnecté ou largué du système parachute, et
- la figure 4 illustre le système d'emport de charge intégralement déconnecté ou largué du système parachute.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

La présente invention prévoit une ouverture d'une pièce mécanique de connexion, en particulier une bouclerie spécifique, par exemple un mousqueton, notamment un mousqueton à ressort, actionnée par un organe de liaison, en particulier un élément textile, tel qu'une corde, ou de nature différente, par exemple un câble métallique, une chaînette etc., passant dans au moins un guide, notamment plusieurs guides, et relié à un moyen de déclenchement, notamment un moyen de préhension, par exemple du type poignée ou anse. Ainsi, selon la présente invention, quelle que soit la direction d'une force d'activation exercée sur le moyen de déclenchement, le guide, notamment les guides, renvoie l'effort exercé par/ou sur le moyen de déclenchement et permettent l'ouverture de la pièce mécanique de connexion.

La présente invention prévoit l'utilisation d'une pièce mécanique de connexion, en particulier une bouclerie spécifique, notamment une bouclerie spécifique à une ouverture sous charge, dont le verrouillage est assuré par un dispositif de fermeture, en particulier un dispositif de fermeture à ressort. Ainsi, indépendamment de l'intensité de la charge, une action sur le dispositif de fermeture est apte à permettre le déverrouillage de celui-ci et prévient également des ouvertures intempestives.

Selon l'invention, dans le cas de la connexion d'un système d'emport de charge à un système parachute, deux pièces mécaniques, telles que notamment deux boucleries spécifiques, sont nécessaires, respectivement sur une partie gauche et une partie droite du système parachute. Il y a, par conséquent, deux organes de liaison passant par des guides respectifs et reliés au même moyen de déclenchement assurant ainsi une ouverture des pièces mécaniques de connexion, quelle que soit l'orientation d'une action mécanique appliquée au moyen de déclenchement. Selon une configuration spécifique, une longueur choisie des organes de liaison et un positionnement approprié du/des guide(s) permettent ainsi d'assurer une ouverture simultanée des deux pièces mécaniques de connexion.

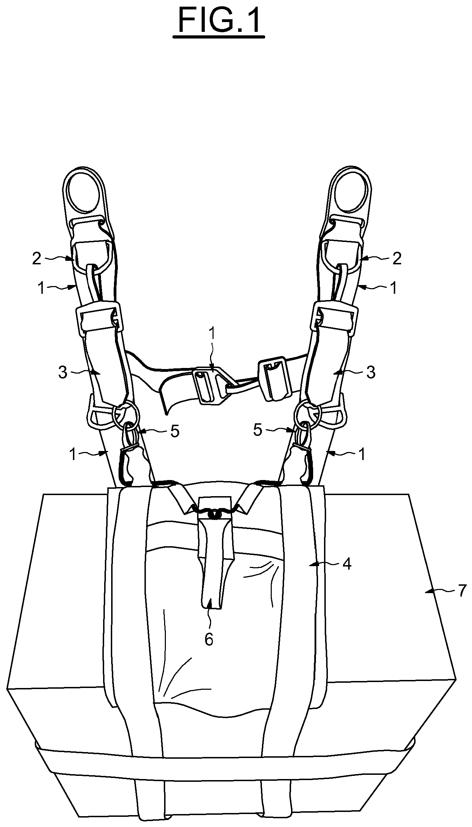

Sur la figure 1, on peut voir un harnais 1, notamment d'un système parachute, s'adaptant au corps d'un utilisateur comprenant des anneaux, par exemple fixés aux sustentes élévateurs d'une voile de parachute.

Le harnais 1 comprend au moins un premier point de fixation 2 sur lequel au moins une première pièce d'accroche 3 du système d'emport de charge 4 peut été fixée. Selon le mode de réalisation de l'invention, le harnais 1 comprend deux premiers points de fixation 2 agencés respectivement sur une partie droite et une partie gauche du harnais 1. Dans cette alternative de réalisation, une première pièce d'accroche 3 droit du système d'emport de charge 4 peut été fixée au point de fixation 2 de la partie droite du harnais 1 et une première pièce d'accroche 3 gauche du système d'emport 4 peut été fixée au point de fixation 2 de la partie gauche du harnais 1.

La fixation de la première pièce d'accroche 3 du système d'emport de charge 4 avec le point de fixation 2 peut se faire par l'intermédiaire d'une pièce mécanique de connexion, en particulier une bouclerie spécifique, notamment une bouclerie spécifique à une ouverture sous charge, dont le verrouillage est assuré par un dispositif de fermeture, en particulier un dispositif de fermeture à ressort.

Au moins un deuxième point de fixation, non représenté sur la figure 1, permet de fixer une deuxième pièce d'accroche du système d'emport de charge 4 de sorte à en assurer la stabilité lors du vol. Avantageusement, deux deuxièmes points de fixation sont prévus pour fixer respectivement deux deuxièmes pièces d'accroche du système d'emport de charge 4 de sorte à en assurer la stabilité, notamment lors des phases en vol et/ou de navigation, en particulier par l'intermédiaire de sangles "cuissarde" ou latérales basses. Le deuxième point de fixation est notamment disposé en partie basse du système de parachute, en particulier du harnais 1.

Le système d'emport de charge 4 est réalisé en matériau textile ou plastique et est destiné à maintenir une charge 7, en particulier lors du vol, par l'intermédiaire d'au moins un élément de maintien, tel qu'une sangle, notamment plusieurs sangles, par exemple constitué de bandes textiles de sorte à libérer les mains de l'utilisateur et limiter les risques de chocs. Afin de satisfaire certaines contraintes opérationnelles, le système d'emport de charge 4 est muni d'un dispositif d'ouverture par une action mécanique permettant de libérer ou larguer la charge emportée, en particulier suite à une action en ce sens de l'utilisateur.

Au sens de la présente invention, l'action mécanique permettant de libérer ou larguer la charge emportée peut être une force de traction sur un moyen de déclenchement, notamment un moyen de préhension, ou une action de poussée sur le moyen de déclenchement.

Le dispositif de déconnexion par une action mécanique comprend au moins une pièce mécanique de connexion 5, en particulier une bouclerie spécifique 5, notamment une bouclerie à fermeture à ressort 5, par exemple un mousqueton, notamment un mousqueton à ressort. En particulier, la pièce mécanique 5 comprend un levier de libération, disposé notamment en position transverse par rapport à la pièce mécanique de connexion 5, configuré pour libérer une mâchoire de la pièce mécanique de connexion 5 et autoriser l'ouverture de la pièce mécanique de connexion 5

Une telle pièce mécanique de connexion 5 peut être, par exemple, un mousqueton à mâchoires à ouverture par ressort, notamment commercialisé par la société Wichard^{©}.

Le dispositif de déconnexion comprend également un organe de liaison, en particulier un élément textile, telle qu'une corde, ou de nature différente, par exemple un câble métallique, une chaînette etc., pour chaque pièce mécanique de connexion 5 reliée à un moyen de déclenchement 6, notamment le moyen de préhension 6. Dans le mode de réalisation de l'invention, les organes de liaison sont reliés à un moyen de déclenchement 6 unique, mais peuvent alternativement être également reliés, selon un mode de réalisation qui n'est pas couvert par les revendications, à un moyen de déclenchement 6 respectif.

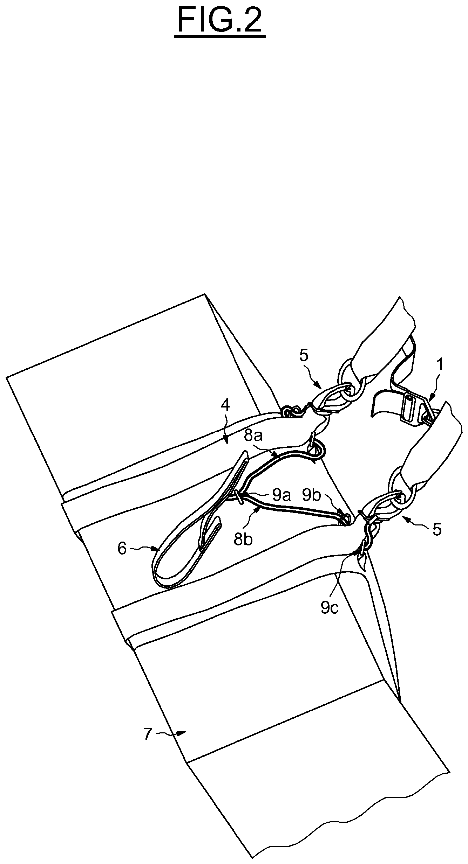

La figure 2 illustre un autre point de vue du système d'emport de charge 4 associé au harnais 1 pour l'emport d'une charge 7, sur lequel on peut voir les pièces mécaniques de connexion 5 et le moyen de déclenchement 6.

On peut également voir deux organes de liaison 8a,8b, tels que deux cordes 8a,8b selon l'exemple présenté, respectivement connecté chacun au levier de libération de la pièce mécanique de connexion 5, notamment de la bouclerie spécifique 5.

Chaque organe de liaison 8a,8b est inséré successivement dans un premier guide 9a et un deuxième guide 9b avant de se connecter au levier de libération de la pièce mécanique de connexion 5. Chaque organe de liaison 8a,8b est inséré successivement dans un premier guide 9a, un deuxième guide 9b, un troisième guide 9c avant de se connecter au levier de libération d'une pièce mécanique de connexion 5.

Afin de protéger les organes de liaison 8a et 8b de l'environnement extérieur, des passages sont formés dans le matériau du système d'emport de charge 4 et/ou du harnais 4. Notamment, un premier passage s'étend essentiellement entre le premier guide 9a et le deuxième guide 9b. De façon complémentaire, un deuxième passage peut s'étendre de manière similaire entre le deuxième guide 9b et le troisième guide 9c.

Chaque organe de liaison 8a,8b est ainsi muni d'au moins un passage, avantageusement deux passages, qui permet de l'isoler de l'extérieur et de prémunir l'utilisateur contre une ouverture intempestive du système d'emport de charge 4.

Toujours en se référant à la figure 2, selon un mode particulier de réalisation, on peut voir que le trajet du deuxième organe de liaison 8b est symétrique au trajet du premier organe de liaison 8a.

Dans un agencement particulier, il apparaît ainsi que le deuxième guide 9b et/ou le troisième guide 9c permet(tent) de diriger l'effort généré par la traction du moyen de déclenchement 6 selon un axe de fixation de la pièce mécanique de connexion 5, notamment perpendiculairement au levier de libération de la pièce mécanique de connexion 5.

Ainsi quelle que soit la direction de l'effort appliqué sur le moyen de déclenchement 6, notamment une traction sur le moyen de déclenchement 6, l'effort est transmis dans la direction optimale vis-à-vis de la pièce mécanique de connexion 5 pour en assurer le déverrouillage et libérer la mâchoire de la pièce mécanique de connexion 5.

Le premier guide 9a permet de guider chaque organe de liaison 8a,8b afin de les faire converger en un point unique de sorte à faciliter leur connexion à au moins un moyen de déclenchement 6, notamment au moyen de déclenchement 6 unique.

Chaque organe de liaison 8a,8b coopère également avec le troisième guide 9c afin de rediriger l'effort produit sur le moyen de déclenchement 6 vers la pièce mécanique de connexion 5. En effet, quelle que soit la direction de l'action mécanique exercée sur le moyen de déclenchement 6, l'effort est redirigé vers la pièce mécanique de connexion 5.

Enfin, le deuxième guide 9b permet d'adapter la circulation de l'organe de liaison 8a,8b à la conformation du système d'emport de charge 4 et/ou du harnais 1 et des passages formés dans les matériaux du système d'emport de charge 4 et/ou du harnais 1.

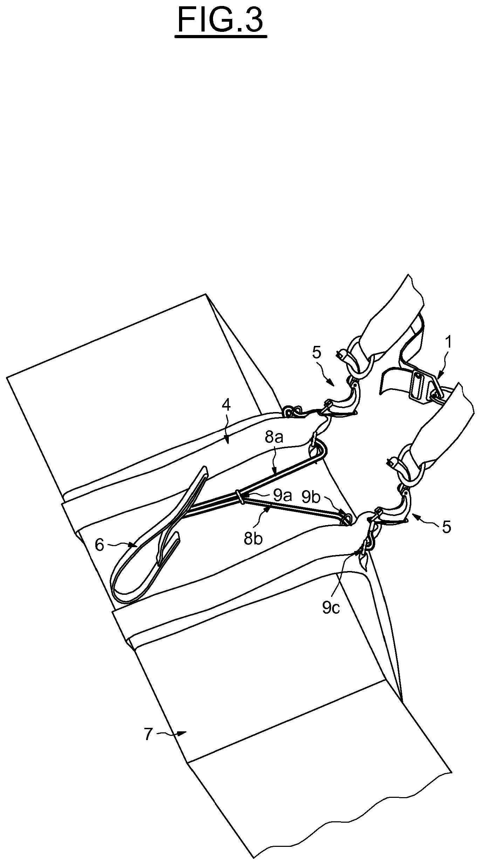

La figure 3 est une représentation analogue à la figure 2 sur laquelle on peut voir la pièce mécanique de connexion 5 en position ouverte après action sur le moyen de déclenchement 6, la mâchoire de la pièce mécanique de connexion 5 ayant été libérée.

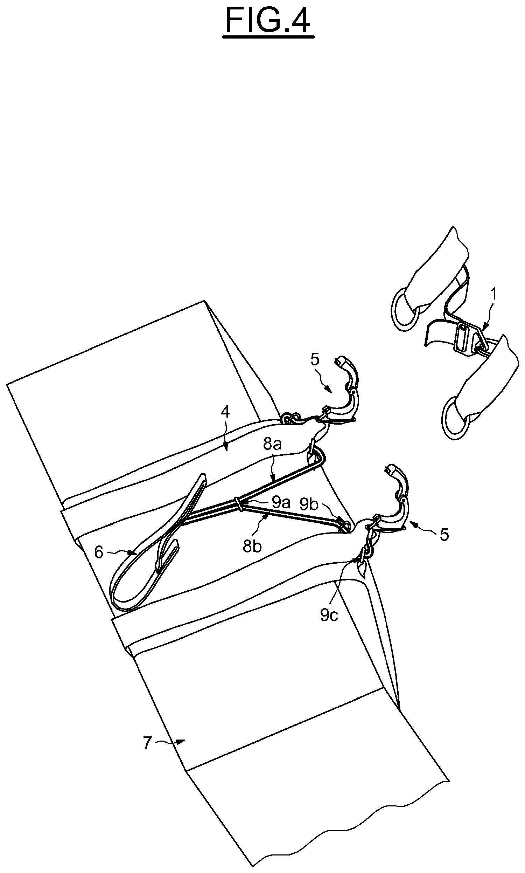

Enfin, la figure 4 est une représentation analogue aux figures 2 et 3 sur laquelle on peut voir la charge 7 et le système d'emport de charge 4 intégralement déconnecté ou largué du système parachute, notamment du harnais 1.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention, qui n'est limitée que par les revendications annexées.

## Revendications

1. Système d'emport de charge (4) configuré pour maintenir en place une charge (7) par rapport à un harnais (1), comprenant un dispositif de déconnexion par une action mécanique permettant de solidariser de façon réversible le système d'emport de charge (4) et le harnais (1), le dispositif de déconnexion par une action mécanique comprenant au moins deux pièces mécaniques de connexion (5), notamment des boucleries à fermeture à ressort (5), au moins deux organes de liaison (8a,8b) et un unique moyen de déclenchement (6), chaque pièce mécanique de connexion (5) étant reliée à l'unique moyen de déclenchement (6) par l'intermédiaire d'au moins un desdits organes de liaison (8a,8b), chaque pièce mécanique de connexion (5) comprenant un levier de libération configuré pour être déclenché par application d'une force selon une direction prédéfinie d'ouverture,
le dispositif de déconnexion comprenant également au moins un guide (9a,9b,9c) configuré pour rediriger un effort appliqué sur l'unique moyen de déclenchement (6), lorsque l'ouverture est requise, vers chaque pièce mécanique de connexion (5) selon la direction prédéfinie d'ouverture,
le dispositif de déconnexion étant configuré pour être disposé sur la charge (4) de sorte que chaque organe de liaison (8a,8b) soit inséré successivement dans un premier guide (9a) de l'au moins un guide, un deuxième guide (9b) de l'au moins un guide et un troisième guide (9c) de l'au moins un guide avant de se connecter au levier de libération de la pièce mécanique de connexion (5) correspondante,
le premier guide (9a) permettant de guider chaque organe de liaison (8a,8b) afin de les faire converger en un point unique de sorte à faciliter leur connexion à l'unique moyen de déclenchement (6).

2. Système d'emport de charge selon la revendication 1, dans lequel le guide (9a,9b,9c) est disposé à proximité de la pièce mécanique de connexion (5), de sorte que l'organe de liaison (8a,8b) passant à travers le guide (9a,9b,9c) soit colinéaire à la direction prédéfinie d'ouverture dans une partie comprise entre le guide (9a,9b,9c) et la pièce mécanique de connexion (5).

3. Système d'emport de charge selon l'une quelconque des revendications précédentes, dans lequel la pièce mécanique de connexion (5) est un mousqueton à mâchoires à ouverture par ressort.

4. Système d'emport de charge selon l'une quelconque des revendications précédentes, dans lequel le moyen de déclenchement (6) est une poignée ou une anse.

5. Système d'emport de charge selon l'une quelconque des revendications précédentes, dans lequel le guide (9a,9b,9c) est disposé dans un plan équidistant des pièces mécaniques de connexion (5).

6. Système d'emport de charge et harnais associé selon la revendication 1, dans lequel le harnais (1) est un harnais d'un système parachute.

## Patentansprüche

1. Lastträgersystem (4), das so eingerichtet ist, dass es eine Last (7) in Bezug auf einen Gurt (1) an Ort und Stelle hält, umfassend eine Trennvorrichtung durch eine mechanische Wirkung, die es ermöglicht, das Lastträgersystem (4) und den Gurt (1) reversibel miteinander zu verbinden, wobei die Trennvorrichtung durch eine mechanische Wirkung mindestens zwei mechanische Verbindungsteile (5), insbesondere Schnallen mit Federverschluss (5), mindestens zwei Verbindungselemente (8a, 8b) und ein einziges Auslösemittel (6) umfasst, wobei jedes mechanische Verbindungsteil (5) über mindestens eines der Verbindungselemente (8a, 8b) mit dem einzigen Auslösemittel (6) verbunden ist, wobei jedes mechanische Verbindungsteil (5) einen Entriegelungshebel umfasst, der so eingerichtet ist, dass er durch Anwendung einer Kraft in einer vordefinierten Öffnungsrichtung ausgelöst wird, wobei die Trennvorrichtung auch mindestens eine Führung (9a, 9b, 9c) umfasst, die so eingerichtet ist, dass sie eine auf das einzige Auslösemittel (6) ausgeübte Kraft, wenn das Öffnen erforderlich ist, zu jedem mechanischen Verbindungsteil (5) in der vordefinierten Öffnungsrichtung umleitet,
wobei die Trennvorrichtung so eingerichtet ist, dass sie an der Last (4) angeordnet ist, so dass jedes Verbindungselement (8a, 8b) nacheinander in eine erste Führung (9a) der mindestens einen Führung, eine zweite Führung (9b) der mindestens einen Führung und eine dritte Führung (9c) der mindestens einen Führung eingeführt wird, bevor es mit dem Freigabehebel des entsprechenden mechanischen Verbindungsteils (5) verbunden wird,
wobei die erste Führung (9a) es ermöglicht, jedes Verbindungselement (8a, 8b) zu führen, um sie an einem einzigen Punkt zusammenzuführen, um ihre Verbindung mit dem einzigen Auslösemittel (6) zu erleichtern.

2. Lastträgersystem nach Anspruch 1, wobei die Führung (9a, 9b, 9c) in der Nähe des mechanischen Verbindungsteils (5) angeordnet ist, so dass das durch die Führung (9a, 9b, 9c) verlaufende Verbindungselement (8a,8b) kollinear zur vordefinierten Öffnungsrichtung in einem Bereich zwischen der Führung (9a, 9b, 9c) und dem mechanischen Verbindungsteil (5) ist.

3. Lastträgersystem nach einem der vorhergehenden Ansprüche, wobei das mechanische Verbindungsteil (5) ein Klauenkarabiner mit Federöffnung ist.

4. Lastträgersystem nach einem der vorhergehenden Ansprüche, wobei das Auslösemittel (6) ein Griff oder ein Bügel ist.

5. Lastträgersystem nach einem der vorhergehenden Ansprüche, wobei die Führung (9a, 9b, 9c) in einer Ebene angeordnet ist, die äquidistant zu den mechanischen Verbindungsteilen (5) ist.

6. Lastträgersystem und zugehöriges Geschirr nach Anspruch 1, wobei das Geschirr (1) ein Geschirr eines Fallschirmsystems ist.

## Claims

1. Load-carrying system (4) configured to hold a load (7) in place relative to a harness (1), comprising a mechanical release device for reversibly securing the load-carrying system (4) to the harness (1), the mechanical release device comprising at least two mechanical connection parts (5), in particular spring-closing buckles (5), at least two connecting members (8a, 8b) and a single triggering means (6), each mechanical connection part (5) being connected to the single triggering means (6) via at least one of said connecting members (8a, 8b), each mechanical connection part (5) comprising a release lever configured to be triggered by the application of force in a predefined opening direction,
the disconnecting device also comprising at least one guide (9a, 9b, 9c) configured to redirect a force applied to the single triggering means (6), when opening is required, to each mechanical connection part (5) according to the predefined opening direction,
the disconnecting device being configured to be disposed on the load (4) such that each connecting member (8a, 8b) is successively inserted into a first guide (9a) of the at least one guide, a second guide (9b) of the at least one guide and a third guide (9c) of the at least one guide before being connected to the release lever of the corresponding mechanical connection part (5),
the first guide (9a) allowing guiding each connecting member (8a, 8b) in order to make them converge at a single point so as to facilitate their connection to the single triggering means (6).

2. The load-carrying system according to claim 1, wherein the guide (9a, 9b, 9c) is disposed in the vicinity of the mechanical connection part (5), such that the connecting member (8a, 8b) passing through the guide (9a, 9b, 9c) is collinear to the predefined opening direction in a portion comprised between the guide (9a, 9b, 9c) and the mechanical connection part (5).

3. The load-carrying system according to any one of the preceding claims, wherein the mechanical connection part (5) is a spring-opening jaw carabiner.

4. The load-carrying system according to any one of the preceding claims, wherein the triggering means (6) is a handle or a loop.

5. The load-carrying system according to any one of the preceding claims, wherein the guide (9a, 9b, 9c) is disposed in a plane equidistant from the mechanical connection parts (5).

6. The load-carrying system and associated harness according to claim 1, wherein the harness (1) is a harness of a parachute system.
